# EUROPEAN PATENT SPECIFICATION

(11) **EP 0 602 581 B1**
(45) Date of publication and mention of the grant of the patent: **29.03.2000**
(21) Application number: 93120078.6
(22) Date of filing: 13.12.1993
(51) Int. Cl.: G11B 27/28, G11B 11/10, G11B 23/32, G11B 19/12, G11B 23/28, G11B 23/30, G11B 23/36

(54) **Recording and reproducing apparatus for data storage and/or audio**
Aufzeichnungs- und Wiedergabegerät zum Speichern von Daten und/oder Audiodaten
Appareil d'enregistrement et de reproduction pour stocker des données et/ou des données audio

(30) Priority: 15.12.1992 JP 35454192
(43) Date of publication of application: 22.06.1994
(73) Proprietor: SONY CORPORATION, Tokyo 141 (JP)
(72) Inventor: Okabe, Masanobu, Shinagawa-ku, Tokyo (JP)
(74) Representative: Melzer, Wolfgang, Dipl.-Ing.

(56) References cited:
- EP-A- 0 391 588
- EP-A- 0 436 877
- EP-A- 0 453 108
- PATENT ABSTRACTS OF JAPAN vol. 014 no. 078 (P-1006) ,14 February 1990 & JP-A-01 294276 (ALPINE ELECTRON INC) 28 November 1989,
- PATENT ABSTRACTS OF JAPAN vol. 016 no. 580 (P-1461) ,18 December 1992 & JP-A-04 229479 (SONY CORP) 18 August 1992,
- PATENT ABSTRACTS OF JAPAN vol. 015 no. 480 (P-1284) ,5 December 1991 & JP-A-03 207051 (SONY CORP) 10 September 1991,
- PATENT ABSTRACTS OF JAPAN vol. 016 no. 296 (P-1378) ,30 June 1992 & JP-A-04 079047 (CANON INC) 12 March 1992,
- PATENT ABSTRACTS OF JAPAN vol. 016 no. 256 (P-1368) ,10 June 1992 & JP-A-04 061666 (CANON INC) 27 February 1992,

## Description

### BACKGROUND OF THE INVENTION

### FIELD OF THE INVENTION

This invention relates to a magneto-optical disc device and a magneto-optical disc, and more particularly, can be widely applied to the case of especially recording/reproducing various data, such as audio data.

Heretofore, in this type of magneto-optical disc device, there are some which are capable of recording/reproducing data compressed audio data on the compact magneto-optical disc in utilizing the method of thermal magnetic recording.

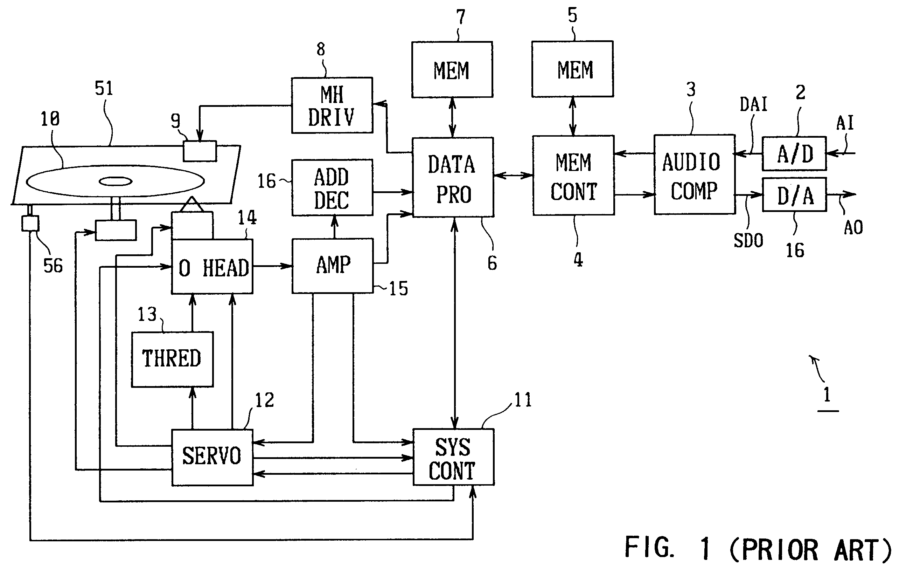

As shown in Fig. 1, in a magneto-optical disc device 1, audio signal AI to be inputted successively is converted into digital signal at an analog-to-digital converter (A/D) 2.
the converted digital signal is audio compression processed at an audio compandor 3 and thus, the quantity of data will be decreased and audio data DAI will be formed.

The magneto-optical disc device 1 stores this audio data DAI in a memory circuit 5 through a memory controller 4 and outputs successively to a data processing circuit 6.

The data processing circuit 6 divides the audio data to be outputted successively from a memory circuit 7 into prescribed blocks and forms error correction codes, and then, modulates with the modulation method suitable for magneto-optical disc recording, and outputs the resultant recording data to a magnetic head driving circuit 8.

The magneto-optical disc device 1 controls the overall operations at a system control circuit 11 and drives to rotate a magneto-optical disc 10 at the prescribed revolution speed via a servo circuit 12.

Furthermore, the magneto-optical disc device 1 drives a thred unit 13 via the servo circuit 12 and thus, transfers a magnetic head 9 and an optical head 14 to the prescribed recording tracks.

The magneto-optical disc device 1 drives the magnetic head 9 corresponding to the recording data and impresses the modulation magnetic field formed by the magnetic head 9 to the desired recording track of the magneto-optical disc 10.

Under these conditions, in the magneto-optical disc device 1, optical beam is irradiated from the optical head 14 to this impressed part of the modulation magnetic field and thus, by applying the method of thermal magnetic recording, audio data can be recorded with high density.

Furthermore, the magneto-optical disc device 1 detects the reflection light of this optical beam at the optical head 14, and outputs the detection result to an address decoder 16 via an amplifier 15, and thus, detects the address information recorded on each track in advance at the address decoder 16.

Wobbling pre-groove is written on the disc previously, and this wobbling is FM modulated so as to record the address information into the whole disc.

Thus, in the magneto-optical disc device 1, audio data can be recorded successively on the desired recording track depending upon this detection result of position information.

Furthermore, at this point, in the magneto-optical disc device 1, tracking error signal, focus error signal, etc., are reproduced at the amplifier 15 and outputted to the servo circuit 12, and thus, the desired audio data can be certainly recorded.

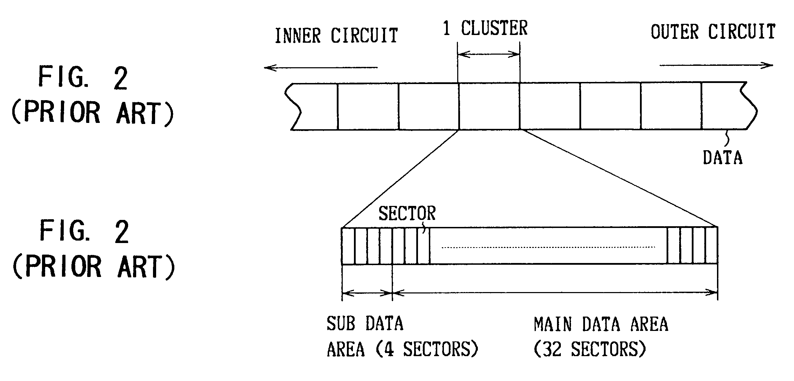

At the time of this recording, in the magneto-optical disc device 1, by processing audio data per block at the data processing circuit 6 as shown in Figs. 2A and 2B, audio data will be recorded per cluster (Fig. 2A).

1 cluster is composed of the sub data for 4 sectors and the main data of 32 sectors (Fig. 2B).

When the track jump is detected based on the position information detection result, the magneto-optical disc device 1 stops the recording and returns to the former recording track and starts recording of audio data from the recording track on which track jump occurs.

At this point, the magneto-optical disc device 1 outputs audio data stored in the memory circuit 5 again per cluster and thus, the dropout of audio data can be avoided in utilizing the memory circuit 5 as the buffer memory, and even in the case where the entire magneto-optical disc device 1 failed to write data due to vibrating, etc., audio signal can be recorded successively.

On the other hand, during reproduction, the magneto-optical disc device 1 decreases the quantity of light of optical beam to be outputted from the optical head 14, and by detecting changes of polarized wave plane of reflection light to be obtained from the magneto-optical disc 10, reproduces the recording data of magneto-optical disc 10 in utilizing the Kerr effect.

The magneto-optical disc device 1 demodulates output signal of the amplifier 15 at the data processing circuit 6 and processes error correction, then outputs to the memory controller 4.

At this point, the magneto-optical disc device 1 outputs the audio data reproduced in utilizing the memory circuit 5 as the buffer memory in the same manner as the time of recording to the audio compandor 3 and processes the audio expansion.

With this arrangement, the magneto-optical disc device 1 demodulates the audio data SDO to digital audio signal AO at this audio compandor 3 and outputs in the form of analog signal via a digital-to-analog converter 16.

Furthermore, during reproduction, by monitoring sub data which are added to the main data the magneto-optical disc device 1 detects the track jump and audio data will be repeatedly reproduced per cluster from the same track based on this detection result as occasion demands.

Thus, even if track jump occurs during reproduction, audio signals can be reproduced avoiding the sound cut in advance.

This type of magneto-optical disc recording/reproducing device is disclosed, for example, in U.S.Patent No. 5,224,087 published on 29.06.1993.

Hereupon, it is considered to be convenient if this type of magneto-optical disc device can be used as an external memory device for storing data of computers, etc..

In this type of magneto-optical disc device, random access can be done and accordingly, the access time can be shortened.

Also since the memory capacity is large and it is developed for audio, the magneto-optical disc itself can be produced easily and in large quantities, and can be supplied at lower cost than the conventional disc.

Also, since the magneto-optical disc can be exchanged like floppy disc, it is considered that its usability can be improved as compared with the hard disc.

However, with this arrangement in case of using as data recorder, it is considered that the magneto-optical disc recorded audio data is erroneously loaded on the magneto-optical disc device for data recording. In contrast with this, it is considered that the magneto-optical disc for data recording is erroneously loaded on the magneto-optical disc device for audio.

Accordingly, if the magneto-optical disc device for audio is allowed to use as data recorder, it has been a problem that the user must control the magneto-optical disc with more certainly.

From EP-A-436 877 a reproducing apparatus is known. In said known apparatus data recorded on an optical disc are read out by an optical pick up and are reproduced. Before start of reproduction, it is determined if the disc loaded into the apparatus is a data disc on which information data such as letter of character data or picture data are recorded, or an audio disc on which audio signals are recorded, the playback mode is automatically selected as a function of the type of the optical disc loaded into the apparatus.

JP-A-4061666 discloses an information processor wherein to protect the information of a magneto-optical disc an area for storing discriminating information for discriminating recording format on a storage medium and for controlling the permission/unpermission of a storage reproducing operation of the recording medium based on the discrimination information is provided. Therefore, a magneto-optical disc is provided with an operating system (OS) discriminating information area and a logical format area.

### OBJECT AND SUMMARY OF THE INVENTION

In view of the foregoing, an object of this invention is to provide a magneto-optical disc device and magneto-optical disc which are capable of simplifying the control of the magneto-optical disc even in the case of using this type of magneto-optical disc as for data recorder.

The foregoing object and other objects of this invention have been achieved by provision of a device according to the independent claims.

Embodiments of the invention are defined in the sub-claims.

The nature, principle and utility of the invention will become more apparent from the following detailed description when read in conjunction with the accompanying drawings in which like parts are designated by like reference numerals or characters.

### BRIEF DESCRIPTION OF THE DRAWING

In the accompanying drawings:
Fig. 1 is a block diagram showing a conventional magneto-optical disc for audio;
Fig. 2 is a diagram typically showing 1 cluster unit of data in recording on the disc, and Fig. 2B is a diagram typically showing the detailed data structure of 1 cluster;
Fig. 3 is a block diagram showing a magneto-optical disc device for data;
Fig. 4 is a block diagram showing the connection to a computer;
Fig. 5 is a schematic view showing a reproducing disc;
Fig. 6 is a schematic view showing a recording/reproducing disc;
Fig. 7 is a schematic view showing a combined disc;
Fig. 8 is a schematic view for the explanation of the TOC of audio disc only for reproduction;
Fig. 9 is a schematic diagram for the explanation of the TOC of data disc;
Fig. 10 is a flowchart for the explanation of the operation of data recorder;
Fig. 11 is a flowchart for the explanation of the operation of magneto-optical disc device for audio disc only;
Fig. 12 is a block diagram showing the audio disc and data disc combined magneto-optical disc device;

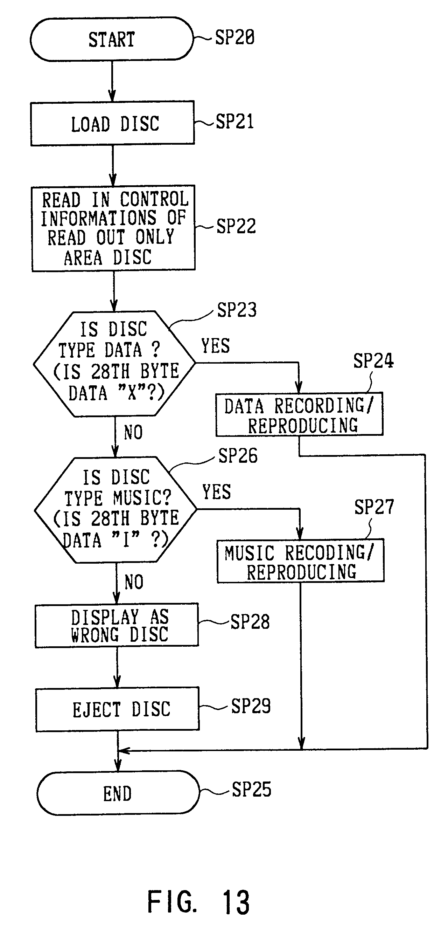

Fig. 13 is a flowchart for the explanation of the operation of audio disc and data disc combined magneto-optical disc device;
Fig. 14 is a schematic view for the explanation of the U-TOC of audio disc which can be recorded;
Fig. 15 is a perspective view illustrating a disc cassette;
Fig. 16 is a flowchart for the explanation of the operation of magneto-optical disc device for audio disc only;
Fig. 17 is a flowchart for the explanation of the operation of data recorder; and
Fig. 18 is a flowchart for the explanation of the operation of audio disc and data disc combined magneto-optical disc device.

### DETAILED DESCRIPTION OF THE PREFERRED EMBODIMENTS

Preferred embodiments of this invention will be described with reference to the accompanying drawings:

### (1) Data Recording/Reproducing Device

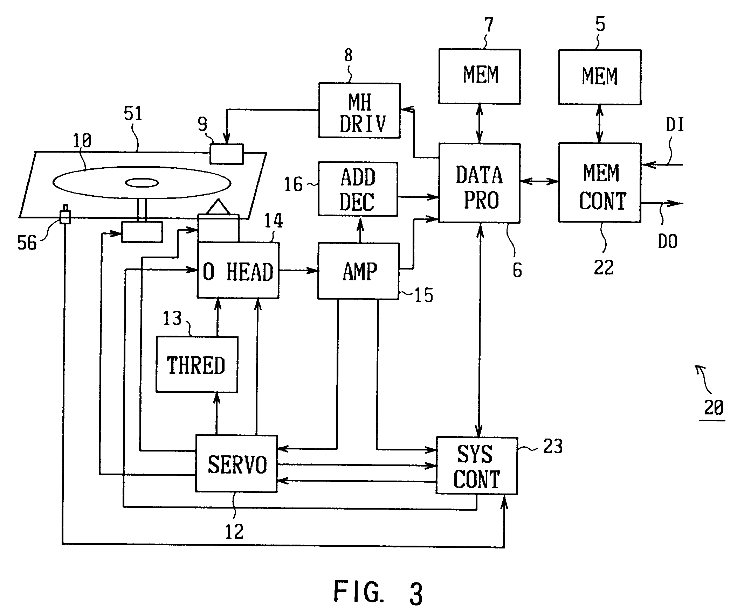

A magneto-optical disc device for data will be hereinafter explained using Fig. 3, corresponding to the magneto-optical disc device for audio.

In Fig. 3, the same reference numerals are used in the same block as Fig. 1.

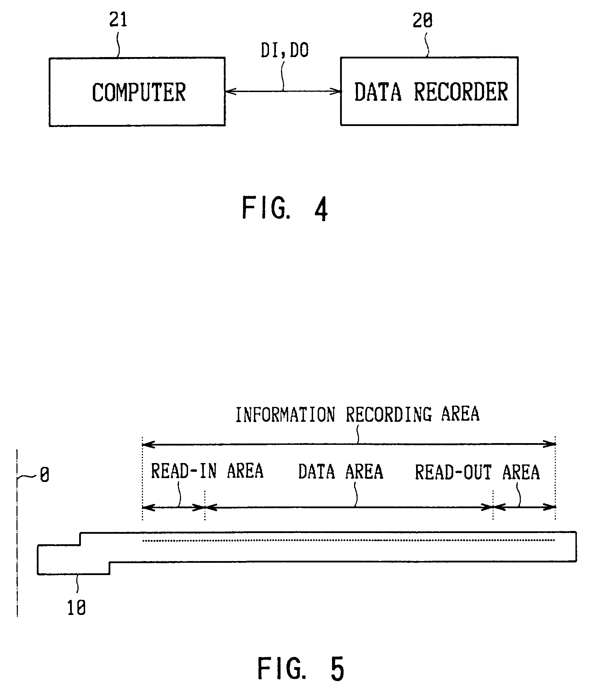

In Fig. 3, 20 generally shows a magneto-optical disc device used for a data recorder, and as shown in Fig. 4, records/reproduces the desired data D1 and D0 as the external memory device of the computer 21.

More specifically, the data recorder 20 inputs data DI and outputs data DO via the memory controller 22 and uses a memory circuit 5 as buffer memory.

Furthermore, the data recorder 20 controls the general operations at the system control circuit 23 and shifts the general operations corresponding to the type of magneto-optical disc 10.

More specifically, in this type of magneto-optical disc 10, there are reproducing disc for reproduction only in which pits are formed in the same manner as the compact disc and audio data are recorded, recording/reproducing the desired data by forming the vertical magnetization film on the entire face, and a combined disc which has zones for both the reproducing disc and recording/reproducing disc on the inner circle side and outer circle side.

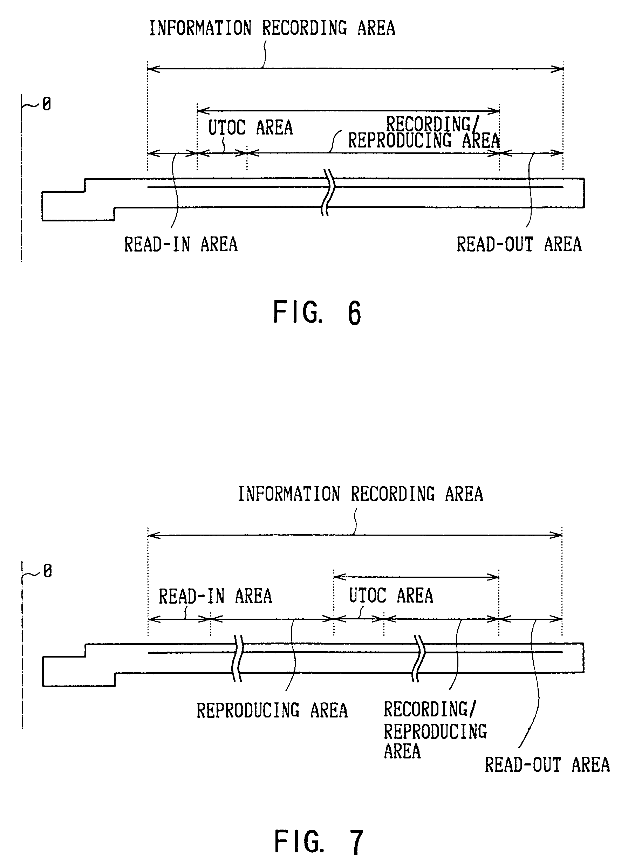

The diagrams of three types are shown in Figs. 5 to 7. Read-in area and read-out area are formed in the innermost periphery and outermost periphery of concentric circle.

In the magneto-optical disc 20, the output signal of light receiving element is shifted and is outputted corresponding to the magneto-optical disc for reproduction only, and thus, the reproducing signal is outputted for the reproducing only magneto-optical disc which is composed of pits by applying the same manner as the compact disc.

Various data, such as data of the outermost circle of the disc, the end of recording zone, etc. will be recorded in the read-out area.

The control information to show, such as type of the magneto-optical disc 10, will be recorded in the read-in area.

Furthermore, in the recording/reproducing disc or the combined disc, UTOC zone will be formed in the inner circle side of the recording/reproducing possible recording and reproducing zone and in utilizing this zone, the recorded data can be controlled.

When the magneto-optical disc 10 is loaded in the data recorder 20, first of all this read-in area will be reproduced and the type of magneto-optical disc 10 can be defined. In this embodiment, the type of discs will be defined according to the control information recorded in this read-in area and the necessary processing can be performed.

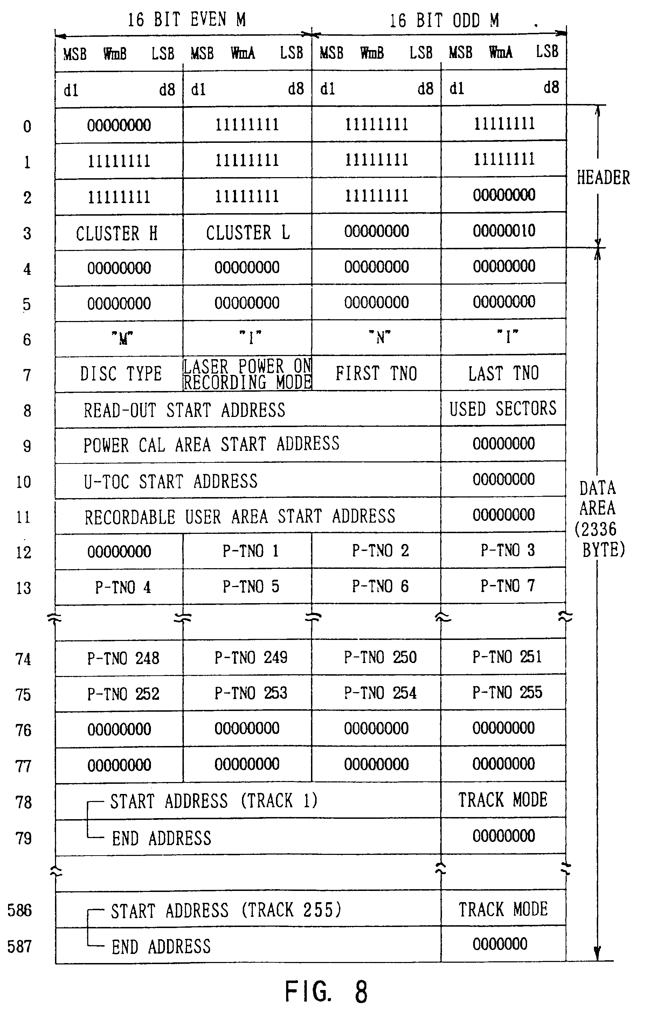

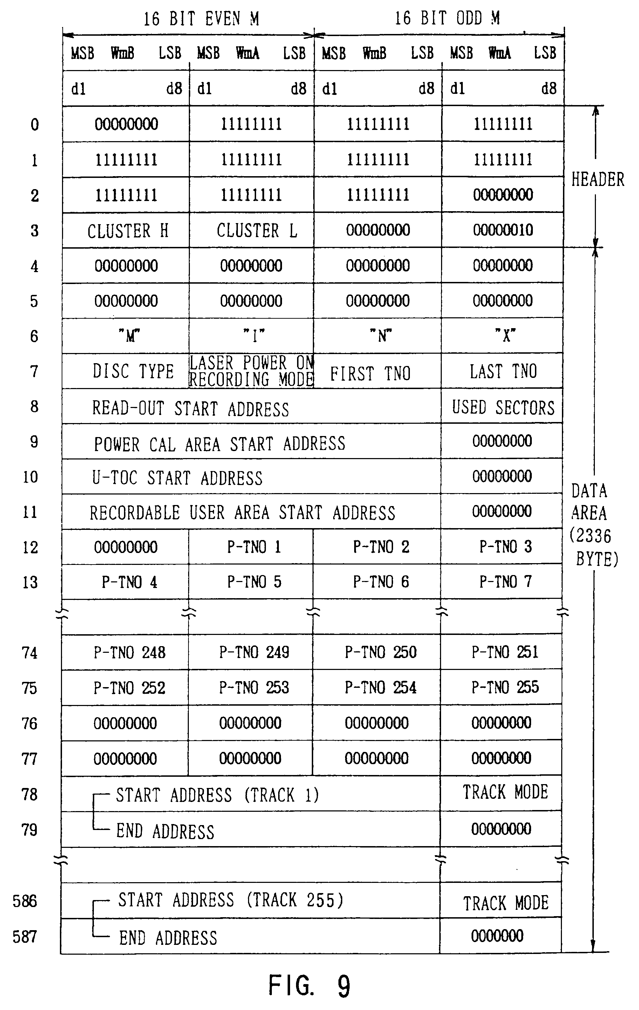

More specifically, in the magneto-optical disc 10, TOC recorded the control data is formed on this read-in area, and the TOC data assigned to the sector "0" is defined by the TOC data table as shown in Figs. 8 and 9.

In these TOC data tables, data of 16 byte each to be shown by address (0) - (3) in a longitudinal direction will be allocated to the header and areas over address (4) in longitudinal direction will be allocated to the main data.

In the 8 byte data to be shown by the longitudinal address (4) - (5), the prescribed data defined by the format will be assigned.

The data, which is able to judge whether the disc is the magneto-optical disc for music or not by 4 byte data to be expressed by the longitudinal address (6), is stored.

Hereinafter, the disc for music is called as "audio disc", and on the other hand, the magneto-optical disc to record data other than audio data is called as "data disc".

More specifically, in the 4 byte data to be expressed by the longitudinal address (6), the type of the magneto-optical disc 10 is recorded by using ASCII (American Standard Code for Information Interchange) code and character code (MINI) is recorded in the audio disc and character code (MINX) is recorded in the data disc.

With this arrangement, the data recorder 20 discriminates the type of this character code and can discriminate between audio disc and data disc.

In this type of the magneto-optical disc, on the data of 16 bytes each to be expressed by the address (7) - (11) in the longitudinal direction, the disc type will be recorded and the quantity of light at the time of recording (laser power on recording mode) and the address recording area (first TNO, last TNO) will be recorded in the recording/reproducing disc and the combined disc; and thus, in this data recorder 20, audio data and the like can be recorded/reproduced in the desired are a in utilizing these control data.

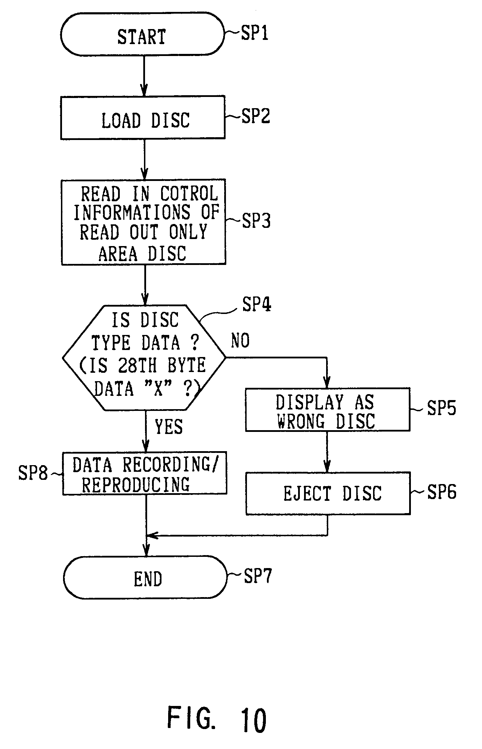

With this arrangement, when the magneto-optical disc 10 is loaded, the data recorder 20 reproduces this read-in area and performs the processing procedure as shown in Fig. 10, and thus, in the case where the audio disc is erroneously loaded, stops recording/reproducing operation.

In the data recorder 20, the system control circuit 23 enters into the procedure from the step SP1 to step SP2 when the electric source is supplied, and at this point, in the case where the magneto-optical disc 10 is loaded, proceeds to the step SP3.

Here, the system control circuit 23 outputs the control data to the servo circuit 12 and transfers the optical head 14 to the read-in area, and then reproduces this read-in area and inputs TOC data.

Then, the system control circuit 23 proceeds to the step SP4 and here by judging whether the character code of the 28th byte in TOC data table is (X) character code or not judges whether the magneto-optical disc 10 loaded is data disc or not.

At this point, if a negative result is obtained, the system control circuit 23 proceeds to the step SP5 and shows that the disc is erroneously loaded through a prescribed display, and outputs this magneto-optical disc at the next step SP6 and terminates the processing procedure at the next step SP7.

With this arrangement, the data recorder 20 can detect the erroneous loading of the audio disc referring to the control information of the magneto-optical disc. For example, erroneous elimination of audio data recorded on the audio disc which is composed of recording/reproducing disc can be avoided in advance.

On the other hand, since an affirmative result can be obtained at the step SP4 in the case where the data disc is loaded correctly, the system control circuit 23 proceeds to the step SP8 and records/reproduces the desired data DI and DO corresponding to the user's operation.

In the case where the magneto-optical disc loaded is the reproducing only disc, the system control circuit 23 reproduces and outputs the data recorded on this magneto-optical disc corresponding to the user's operation and thus, for example, the data recorder 20 can input the program to be supplied via the reproducing only disc to a computer 21 easily.

On the other hand, in the case where the magneto-optical disc loaded is the combined disc, the system control circuit reproduces the reproduction only area and outputs data corresponding to the user's operation and records/reproduces input/output data of the computer 21 in utilizing the recording/reproducing area.

With this arrangement, when this recording/reproducing operation is terminated, the system control circuit 23 proceeds to the step SP7 corresponding to the user's operation and terminates this processing procedure.

According to the foregoing construction, the erroneous loading of the audio disc can be detected by judging whether the data disc or not in utilizing the control information of the disc. For example, the erroneous elimination of audio data recorded on the audio disc composed of recording/reproducing disc can be avoided in advance, and thus, the control of the magneto-optical disc can be simplified.

### (2) Magneto-optical Disc Device for Audio Disc

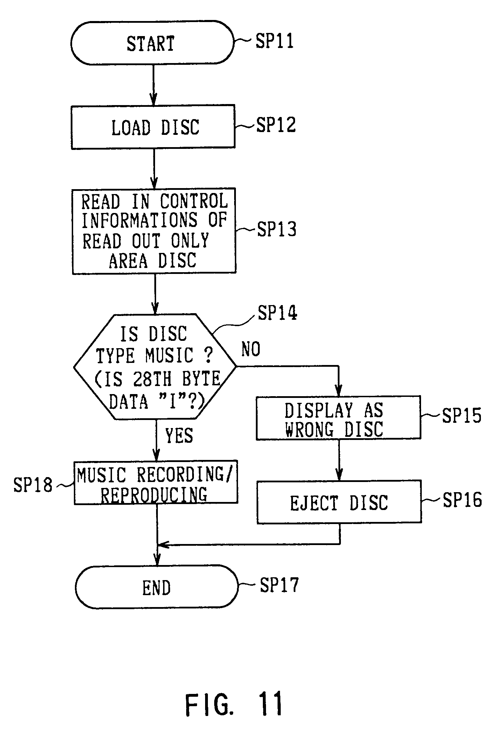

On the other hand, in a magneto-optical disc device 20 used for recording/reproducing only audio disc, by performing the processing procedure as shown in Fig. 11 at the system control circuit 23, the erroneous elimination of the data disc can be avoided in advance.

More specifically, in the magneto-optical disc device 20, when the electric source is supplied, the system control circuit 23 enters into this procedure from the step SP11 to the step SP12 and if the magneto-optical disc 10 is loaded at this point, proceeds to the next step SP13.

Here, the system control circuit 23 outputs the control data to the servo circuit 12 and transfers the optical head 14 and reproduces read-in area and inputs the resultant TOC data, then proceeds to the step SP14.

At this point, by judging whether the character code of 28th byte on the TOC data table is character code (1) or not the system control circuit 23 judges whether the magneto-optical disc 10 loaded is audio disc or not, and if a negative result is obtained, proceeds to the step SP15 and displays that the disc is erroneously loaded via the prescribed display.

Then, the system control circuit 23 outputs this magneto-optical disc 10 at the next step SP16 and terminates this processing procedure at the following step SP17.

Thus, in the magneto-optical disc device 20, the erroneous loading of data disc can be detected based on the control information of the magneto-optical disc.

By detection of the erroneous loading, the erroneous elimination of precious data recorded on the data disc composed of recording/reproducing disc can be avoided in advance.

On the other hand, in the case where the audio disc is loaded correctly, since an affirmative result is obtained at the step SP14, the system control circuit 23 proceeds to the step SP18 and records/reproduces the desired audio signals AI and AO corresponding to the user's operation.

The system control circuit 23 reproduces digital audio signals recorded on the magneto-optical disc corresponding to the user's operation in the case where the magneto-optical disc loaded is the reproducing only disc, on the other hand, in the case where the magneto-optical disc loaded is the combined disc, reproduces reproduction only area and digital audio signal, and records/reproduces digital audio signals in utilizing the recording/reproducing area.

Furthermore, in the case where the magneto-optical disc loaded is the recording/reproducing disc, audio signals will be recorded/reproduced on this magneto-optical disc corresponding to the user's operation.

Thus, when this recording/reproducing function is completed the system control circuit 23 proceeds to the step SP17 corresponding to the user's operation and completes this processing procedure.

According to the foregoing construction, by judging whether it is audio disc or not in utilizing the control information of the disc, the erroneous loading of data disc can be detected, e.g., the erroneous elimination of precious data recorded on the data disc composed of recording/reproducing disc can be avoided in advance and thus, the control of magneto-optical disc can be simplified.

### (3) Combined Magneto-optical Disc Device

If both the audio disc and the data disc can be recorded/reproduced in this type of magneto-optical disc device, it is considered that the usability can be improved and the device can be provided with a small cost up because there are many common circuits in both type of device, and to be convenient.

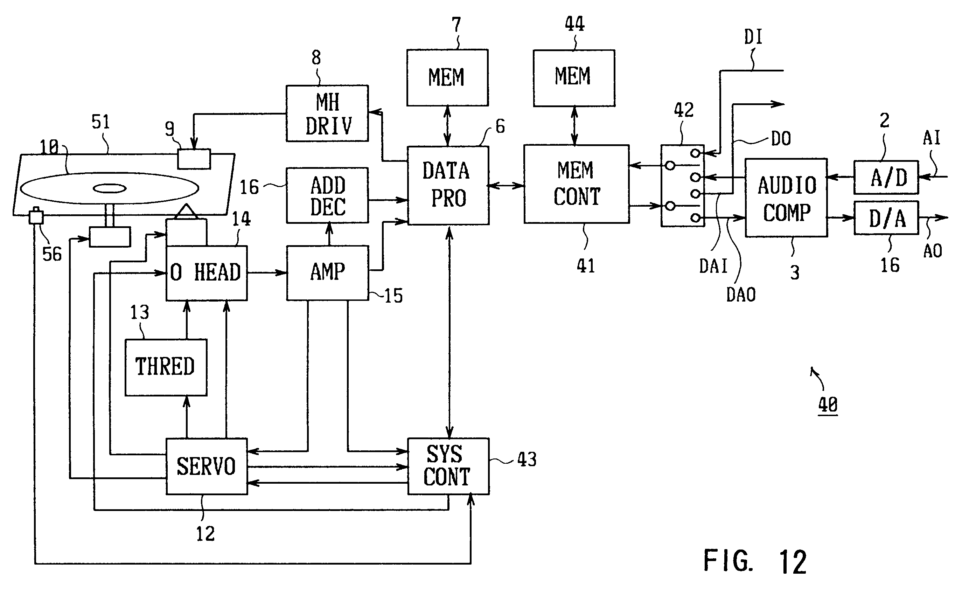

In the magneto-optical disc device 40 as shown in Fig. 12, the operation can be shifted in accordance with the TOC data table of the magneto-optical disc 10 and thus, both audio disc and data disc can be recorded and reproduced.

More specifically, in the magneto-optical disc device 40, a selector 42 will be placed between a memory controller 41 and the audio compandor 3, and the contacts of this selector 42 will be selected by the control circuit 43.

With this arrangement, in the case where the audio disc is loaded, the magneto-optical disc device 40 records digital audio signal DAI to be inputted via the audio compandor 3, and the digital audio data DAO to be obtained upon reproducing the magneto-optical disc 10 to the audio compandor 3.

On the other hand, in the case where the magneto-optical disc loaded is the data disc, the magneto-optical disc device outputs and records the desired data DI to be inputted from the computer connected to the outside of a memory controller 41 and also various data DO to be obtained upon reproducing this magneto-optical disc 10 will be outputted to the computer.

Furthermore, in the magneto-optical disc device 40, in the case where the magneto-optical disc 10 loaded is the audio disc, sound jump can be avoided in advance by using the memory circuit 44 as a buffer memory of audio data, and on the other hand, in the case where the magneto-optical disc 10 loaded is the data disc, by using this memory circuit 44 as buffer memory of data DO and DI, the data DI can be inputted and the data DO can be outputted with the prescribed transmission speed.

In this magneto-optical disc device 40, the system control circuit 43 enters into the processing procedure shown in Fig. 12 from the step SP20 to the step SP21 when the electric source is supplied, and here, if the magneto-optical disc 10 is loaded moves to the step SP22 and reproduces read-in area and inputs the TOC data.

Then, the system control circuit 43 proceeds to the step SP23, and here by judging whether the character code of the 28th byte of the TOC data table is the character code (X) or not judges whether the magneto-optical disc loaded is the data disc or not, and if an affirmative result is obtained, moves to the step SP24.

At this point, the system control circuit 43 outputs the control data to the selector 42 and data DI is inputted and data DO is outputted between the computer connected to the outside.

Furthermore, the system control circuit 43 records and reproduces the desired data DI and DO corresponding to the user's operation and if the user operates step function key, proceeds to the step SP25 and terminates the processing procedure.

Thus, in the magneto-optical disc device 40, in the case where the data disc is loaded, the operation is shifted in accordance with this data disc and data DO and DI corresponding to this data disc can be recorded and reproduced as occasion demands.

On the other hand, if a negative result is obtained at the step SP23, the system control circuit 43 proceeds to the step SP26 and judges whether the magneto-optical disc 10 loaded is the audio disc or not by judging the character code of the 28th byte of the TOC data table is the character code (1) or not.

At this point, if an affirmative result is obtained, the system control circuit 43 proceeds to the step SP27 and after switching the contacts of the selector 42 to the audio compandor 3 side records and reproduces the desired audio signals SI and SO corresponding to the user's operation.

With this arrangement, in the magneto-optical disc device 40, in the case where the audio disc is loaded, audio signals AI and AO which shift the operation corresponding to this audio disc and as necessary, will be recorded/reproduced, and when the user operates the stop operation key, proceeds to the step SP25 and terminates the processing procedure.

On the other hand, if a negative result is obtained at the step SP26, in this case the magneto-optical disc is judged as other than prescribed disc, the system control circuit 43 proceeds to the step SP28 and, after showing that the disc other than prescribed one is erroneously loaded via the prescribed display, ejects this magneto-optical disc at the next step SP29 and terminates this processing procedure at the step SP25.

According to the construction as shown in Fig. 12, by discriminating the data disc between the audio disc in utilizing the control information of the disc and shifting the operation, both the data disc and the audio disc can be recorded and/or reproduced, and thus, the control of the magneto-optical disc can be simplified and the usability can be improved.

### (4) Discrimination by UTOC

According to this embodiment, the magneto-optical disc device judges whether the magneto-optical disc is the audio disc or not referring to the UTOC data table formed in the UTOC area of the magneto-optical disc, and records/reproduces the corresponding magneto-optical disc selectively.

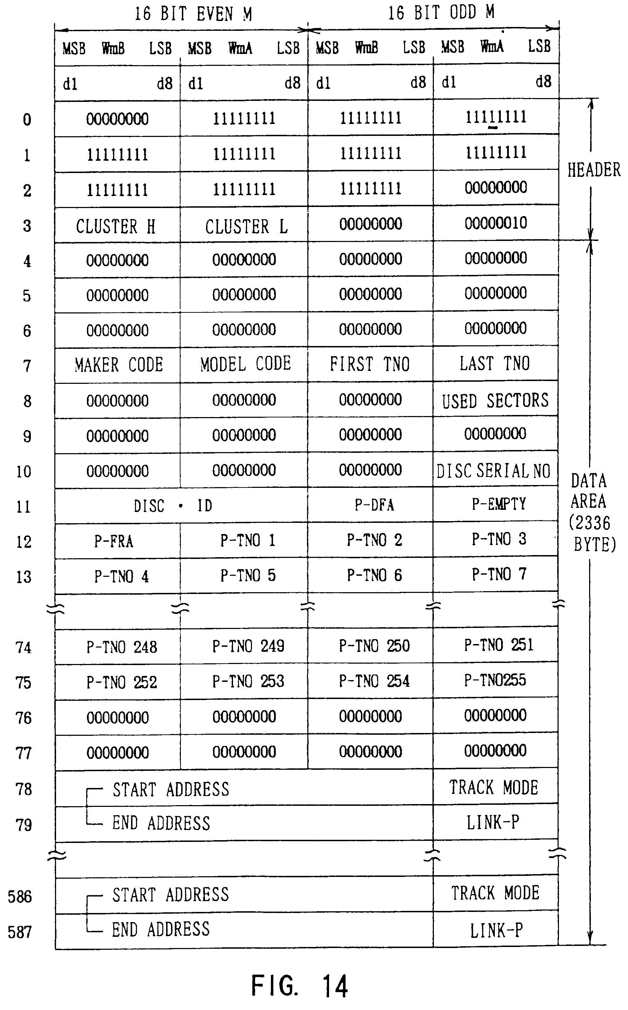

In the magneto-optical disc (Figs. 5 to 7) described above, the UTOC area is formed inner circle side of recording and reproducing possible recording/reproducing area, and here, as shown in Fig. 14 UTOC data table is formed.

In this UTOC data table, as well as the TOC data table, the header is assigned and subsequently, the prescribed data area is formed, and this data area is up-dated and then, at the time of recording/reproducing, the construction of recording/reproducing area can be detected.

More specifically, in the UTOC data table, the files recorded in the recording/reproducing area respectively is recorded in the area of longitudinal address (12) - (75) and the recording area of each file is recorded in the area of longitudinal address (78) - (587).

In this UTOC data table, the disc is judged whether the audio disc or not at the 4th bit data d4 (shown by (1) underlined) of the 4th byte of the header, and when it is the audio disc or data disc, this 4th bit data d4 is set to the logic (0) or the logic (1), respectively.

Thus, the magneto-optical disc is able to judge whether the audio disc or not by setting this 4th bit data d4 in accordance with the data recorded in the recording/reproducing area, and also this 4th bit data d4 is set the prescribed logical level in advance and can be provided to the user as the audio disc or data disc.

According to this embodiment, in the data recorder, the magneto-optical disc device for audio disc and the combined type magneto-optical disc device, the recording/reproducing operation is shifted in the same manner as in the case of TOC data table, and thus, the desired audio data or data other than audio data is recorded and reproduced on the corresponding magneto-optical disc.

According to the construction as shown in Fig. 14, if the type of disc is defined at the recording and reproducing possible UTOC area, the desired audio data or data other than audio data can be recorded/reproduced on the corresponding magneto-optical disc, and accordingly, the management of disc is simplified and the desired data can be recorded and reproduced with more certainly.

### (5) Discrimination by Disc Cassette

In this embodiment the disc type is discriminated in utilizing the disc cassette to store the recording medium of the magneto-optical disc.

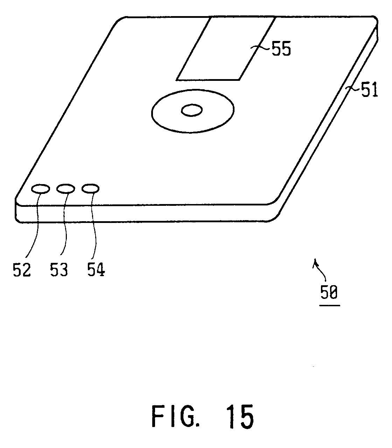

More specifically, as shown in Fig. 15, this type of magneto optical disc 50 is housed in a disc cassette 51 and by opening and closing the shutter 55. It irradiates the optical beam through a window formed on this disc cassette 51 and simultaneously, by impressing the prescribed modulation magnetic field, the desired information can be recorded on the disc shaped recording medium stored in the disc cassette 51.

In this disc cassette 51, through holes 52 to 54 are formed on the prescribed positions and the through hole 52 of the outer side slides the prescribe rib and then, this through hole 52 can be shifted to the opened state and/or closed state.

Thus, the magneto-optical disc 50 forms a window in the through hole 52 by sliding this rib and this magneto-optical disc 50 can be set to the write-in protect state.

Furthermore, the magneto-optical disc 50 is arrange to be able to form a through hole 53 adjacent to the through hole 52; and at the time when this through hole 53 is formed, a rewrite possible disc shaped recording medium will be stored in this disc cassette 51.

With this arrangement, in the magneto-optical disc 50, the existence of this through hole 52 is detected and the type of disc shaped recording medium can be defined.

Furthermore, in the magneto-optical disc 50, the third through hole 54 can be formed adjacent to the second through hole 53 and when this through hole 54 is formed, the magneto-optical disc generally forms the data disc.

Thus, in the magneto-optical disc device, audio disc and data disc can be discriminated by detecting the existence of the third through hole 54.

The existence of the through hole it is detected by a micro switch 56 (Figs. 3 and 12) and on/off state of the switch is judged by the system control section 23 and 43 so as to judge disc type.

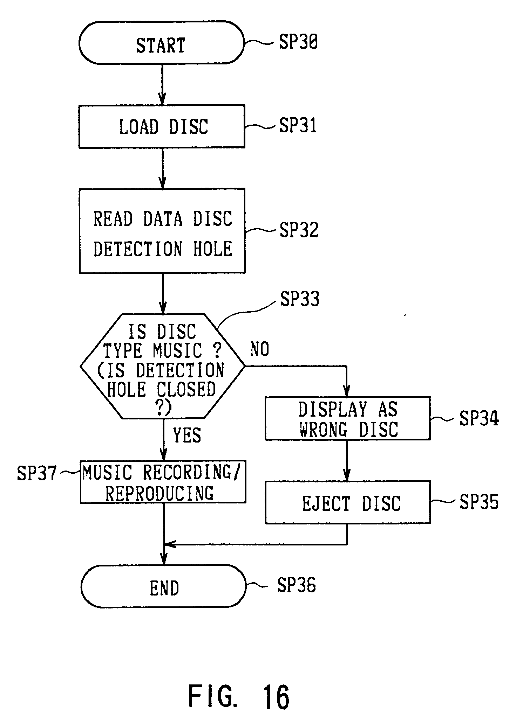

The magneto-optical disc devices 20 and 40 for audio disc only performs the processing procedure as shown in Fig. 16, as against the magneto-optical disc 50, and shifts the operation and thus, records and reproduces the desired data only on the corresponding audio disc.

More specifically, the magneto-optical disc devices 20 and 40 enter into the procedure from the step SP30 to the step SP31 and at this point, if the magneto-optical disc 50 is loaded, proceed to the subsequent step SP32.

Here, the magneto-optical disc device by pressing the position where the through hole 54 is formed with the tip of a micro switch 56, which detects the existence of the through hole 54 via this micro switch 56.

Accordingly, the magneto-optical disc device input the contact information on the micro switch 56 and judges whether it is the audio disc or not at the step SP33.

At this point, if a negative result is obtained, magneto-optical disc device proceeds to the step SP32 and shows that the disc is erroneously loaded via the prescribed display and outputs this magneto-optical disc at the next step SP35 and terminates the processing procedure at the next step SP36.

On the other hand, if an affirmative result is obtained at the step SP33, the magneto-optical disc device proceeds to the step SP37 and records/reproduces the desired audio data responding to the operator's operation, and moves to the step SP36 and terminates the processing procedure.

With this arrangement, the disc type is discriminated by forming the through hole on the disc cassette 51, only audio disc can be selectively recorded and reproduced.

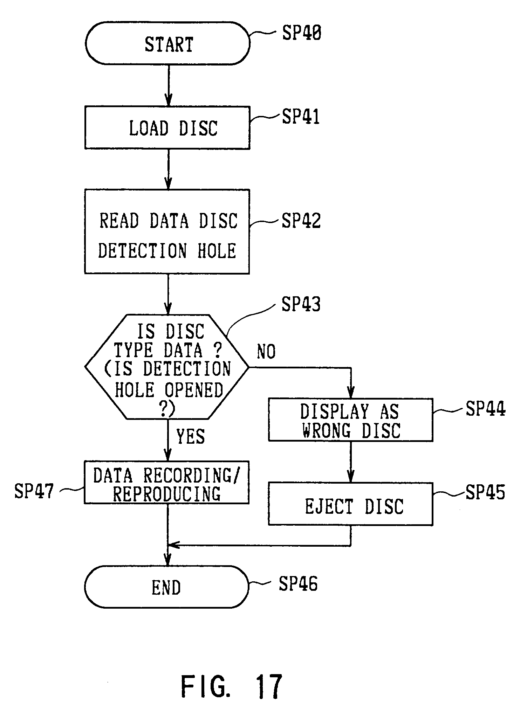

On the other hand, the data recorder performs the processing procedure as shown in Fig. 17 and records/reproduces the desired data on the corresponding data disc only.

More particularly, the data recorder enters into the procedure from the step SP40 to the step SP41 and here, if the magneto-optical disc 50 is loaded, proceeds to the next step SP42.

At this point, the data recorder can detect the existence of the through hole 54 via the micro switch 56 in the same manner as in the case of magneto-optical disc device by pressing the point where the through hole 54 is formed with the extreme end of the micro switch 56, inputs information on the contact of this micro switch 56, and proceeds to the step SP43 and judges whether the data disc or not.

At this point, if a negative result if obtained, the data recorder proceeds to the step SP44 and shows that the disc is erroneously loaded via the prescribed display and subsequently, ejects this magneto-optical disc at the step SP45 and then, at the next step SP46 terminates the processing procedure.

On the other hand, if an affirmative result is obtained at the step SP43, the data recorder proceeds to the step SP47 and after recording and reproducing the desired audio data responding to the user's operation moves to the step SP46 and terminates the processing procedure.

With this arrangement, if the through hole 54 formed on the disc cassette 51 and disc type is discriminated, only data disc can be selectively recorded and reproduced.

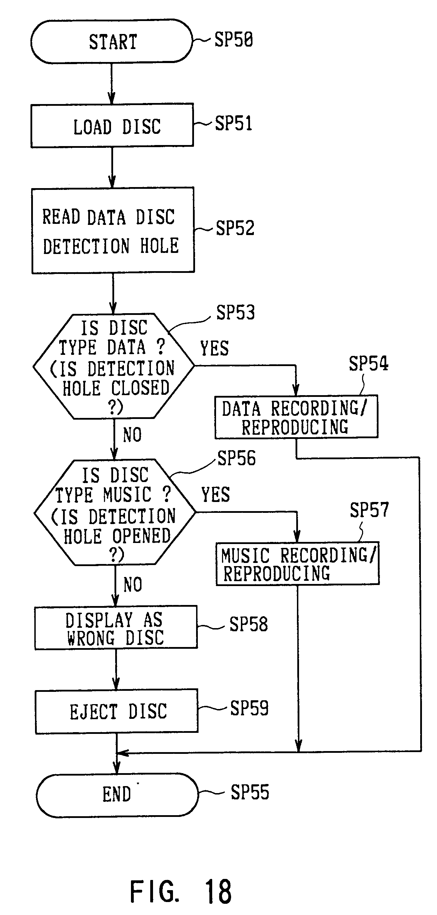

On the other hand, the magneto-optical disc combined with audio disc and data disc performs the processing procedure as shown in Fig. 18 and shifts the operation corresponding to the audio disc and data disc.

More specifically, the magneto-optical disc device enters into the procedure from the step SP50 to the step SP51 and here, if the magneto-optical disc 50 is loaded, proceeds to the next step SP52.

At this point, the magneto-optical disc device inputs information on the contact of the micro switch 56 by pressing the position where the through hole 54 is formed with the extreme end of the micro switch 56 in the same manner as in the case of the data recorder and the magneto-optical disc device for audio disc only, and then judges whether it is the data disc or not at the step SP53.

Here, if an affirmative result is obtained, the magneto-optical disc device proceeds to the step SP54 and records and reproduces the desired audio data corresponding to the user's operation and then, proceeds to the step SP55 and terminates the processing procedure.

On the other hand, if a negative result is obtained at the step SP53, the magneto-optical disc device proceeds to the step SP56 and here, judges whether the disc is an audio disc or not, and if an affirmative result is obtained, proceeds to the step SP57.

At this point, the magneto-optical disc device records and reproduces the desired audio data corresponding to the user's operation and then, proceeds to the step SP55 and terminates the processing procedure.

On the other hand, if a negative result is obtained at the step SO56, since it can be judged as the magneto-optical disc other than the defined disc, the magneto-optical disc device moves to the step SP58 and shows that the disc other than defined is erroneously loaded via the prescribed display and outputs this magneto-optical disc at the next step SP59, and subsequently at the step SP55 terminates this processing procedure.

With this arrangement, by forming the through hole and judging the disc type, the corresponding data can be recorded and reproduced on the audio disc and data disc respectively.

### (6) Other Embodiments

Furthermore, the embodiment described above has dealt with the case of showing the disc type by the character codes in the TOC data table and in the UTOC data, by the prescribed bit of header. However, this invention is not only limited to this, but also various discrimination data may be widely applied.

Furthermore, the embodiment described above has dealt with the case of displaying the error message and outputting the disc when the disc is erroneously loaded. However, this invention is not only limited to this, but also widely applicable to the case of only outputting the disc.

Moreover, the embodiment described above has dealt with the case of converting audio signals composed of analog signals into digital signals and recording/reproducing in the magneto-optical disc device for audio disc only. However, this invention is not only limited to this, but also widely applicable to the case of recording/reproducing audio data by inputting/outputting the compressed audio data directly.

## Claims

1. A recording and reproducing apparatus, comprising:
a first data input means (2); a first data output means (16);
a second data input means (DI); a second data output means (D0);
a data compressing/expanding means (3) connected with said first said first data input/output means (2, 16), for compressing data supplied from said first data input means (2) and for expanding data to be supplied said first data output means (16);
a switching means (42) for switching between the output of said data compressing means and said second input means, and between the input of said data expanding means and said second output means;
a judgement means (6) for judging the data type of the recording medium (10); and
a control means (41) for controlling said switching means on the basis of said judgement means.

2. A recording and reproducing apparatus according to claim 1, wherein:
in said judgement means (6) for judging a recording medium data type, when it is judged that said recording medium (10) is for audio, said control means (41) controls to switch said switching means (42) from said second data input/output means (DI, D0) to said data compandor means (3).

3. A recording and reproducing apparatus according to claim 1, wherein:
in said judgement means (6) for judging recording medium data type, when it is judged that said recording medium (10) is for data storage, said control means (41) controls to switch said switching means (42) from said data compressing/expanding means (3) to said second data input/output means (DI, D0).

4. A recording and reproducing apparatus according to any of claims 1 to 3, wherein said judgement means (6) for judging recording medium (10) data type judges a discrimination hole (52-54) which is formed on a cartridge of the recording medium (10).

5. A recording and reproducing apparatus according to any of claims 1 to 4, wherein said judgement means (6) for judging recording medium (10) type judges on the basis of data which is previously recorded in a control information on the recording medium (10).

6. A recording and reproducing apparatus according to claim 5, wherein the information which is previously recorded in the control information on said recording medium (10) is character codes.

7. A recording and reproducing apparatus according to claim 6, wherein said character codes are "M", "I", "N", "I", or "M", "I", "N", "X".

8. A recording and reproducing apparatus according to claim 5, wherein said judgement means (6) for judging recording medium data type judges the bit logic which is recorded in the predetermined position of the control information on the recording medium (10).

9. A recording and reproducing apparatus according to any of claims 1 to 8, comprising:
an optical head (14) for recording or reproducing data from the recording medium (10);
a magnetic head (9) which is placed facing said optical head (14) in which the recording medium (10) is between the magnetic head (9) and the optical head (14);
a signal processing means (15, 16) for performing a specific signal processing of the reproducing signal read out from said recording medium (10); and
a memory control means (43) for controlling said signal processing means (15, 16).

10. A recording and reproducing apparatus, comprising:
a head (3, 4) for reproducing data from a recording medium (2) and for recording data on the recording medium (2);
a signal processing means (5) for performing a specific signal processing of the reproducing signal read out by using said head (3);
a means (21) for converting the signal from said signal processing means (5) into an audio signal;
a judgement means (56) for judging the data type of the recording medium (10);
and a control means (43) for prohibiting the recording/reproducing operation when it is judged that a recording medium (10) for non-audio data storage is loaded in said apparatus.

11. A recording and reproducing apparatus according to claim 10, wherein the prohibition control of said recording/reproducing operation rejects the loaded recording medium (10).

12. A recording and reproducing apparatus according to claims 10 or 11, wherein the judgement means (56) for judging the data type of said recording medium (10) judges discrimination holes (52-54) formed on the cartridge of recording medium (10).

13. A recording and reproducing apparatus according to claims 10 or 11, wherein the judgement means (56) for judging the data type of said recording medium (10) judges based on the information recorded previously in the control information on the recording medium (10).

14. A recording and reproducing apparatus according to any of claims 10 to 13, further comprises an indication means for indicating a warning when it is judged that other than recording medium (10) for data storage is loaded in said judgement means (56).

15. A recording and reproducing apparatus according to any of claims 12 to 14, wherein the data recorded previously in the control information on said recording medium (10) is characteristic code.

16. A recording and reproducing apparatus according to claim 15, wherein said characteristic codes are "M", "I", "N", "I", or "M", "I", "N", "X".

17. A recording and reproducing apparatus according to any of claims 10 to 16, wherein said judgement means (56) for judging the data type of the recording medium (10) judges logic of bit recorded in the specific position of control information on the recording medium (10).

18. A recording and reproducing apparatus according to any of claims 10 to 17, further comprising:
a means (14, 16) for read out control information which is recorded in data recording area, only reproducing area and a part of said only reproducing area of said recording medium which is loaded on said recording/reproducing apparatus; and
a judgement means (6) for judging whether the loaded recording medium (10) is for audio or for data storage on the basis of said control information, wherein as a result of said judgement means (6), when the recording medium (10) is judged as disc for audio, the recording of audio data into said data recording area and the reproduction of said data recording area and only reproducing area are allowed.

19. A recording and reproducing apparatus according to any of claims 10 to 17, further comprising:
a means (14, 16) for read out control information which is rewritable control information recorded in data recording area, only reproducing area and a part of said data recording area of said recording medium (10) which is loaded on said recording/reproducing apparatus; and
a judgement means (6) for judging whether the loaded recording medium (10) is for audio or for data storage on the basis of said control information, wherein as a result of said judgement means (6), when the recording medium (10) is judged as disc for audio, the recording of audio data into said data recording area and the reproduction of said data recording area and only reproducing area are allowed.

20. A recording and reproducing apparatus according to any of claims 10 to 17, further comprising:
an optical head (14) for reproducing data from recording medium (10) and for recording data to said recording medium (10);
an magnetic head (9) positioned facing said optical head (14), said recording medium (10) existing between the optical head (14) and the magnetic head (9);
a signal processing means (15, 16) for performing a specific signal processing of the reproduction signal from said optical head (14);
a memory (7) for storing temporarily a signal from said signal processing means (15, 16); and
a memory control means (6) for controlling said memory (7).

21. A recording and reproducing apparatus comprising:
a head (3, 4) for reproducing data from a recording medium (2) and for recording data on the recording medium (2);
a signal processing means (2, 21) for performing a specific signal processing of the reproduced signal read by using said head (3)
a means (22, 23) for outputting signal from said signal processing means;
a judgement means (56, 43, 6) for judging the data type of the recording medium (10); and
a control means (41) for controlling to prohibit the recording and reproducing operation when it is judged that the recording medium (10) for audio is loaded in said apparatus.

22. A recording and reproducing apparatus according to claim 21, wherein said judgement means (56, 43, 6) for judging the data type of the recording medium (10) judges discrimination holes (52-54) formed on the cartridge (51) of the recording medium (10).

23. A recording and reproducing apparatus according to claims 21 or 22, wherein said judgement means (56, 43, 6) for judging the data type of the recording medium (10) judges based on the information previously recorded in the control information on the recording medium (10).

24. A recording and reproducing apparatus according to any of claims 21 to 23, further comprises an indication means for indicating a warning when it is judged that other than recording medium (10) for data storage is loaded in said judgement means (56, 43, 6).

25. A recording and reproducing apparatus according to claim 21, wherein the data recorded previously in the control information on said recording medium (10) is characteristic code.

26. A recording and reproducing apparatus according to claim 25, wherein said characteristic codes are "M", "I", "N", "I", or "M", "I", "N", "X".

27. A recording and reproducing apparatus according to claim 21, wherein said judgement means (56, 43, 6) for judging type of the recording medium (10) judges logic of bit recorded in the specific position of control information on the recording medium (10).

28. A recording and reproducing apparatus according to claim 21, further comprising:
a means (14) for read out control information which is recorded in data recording area, only reproducing area and a part of said only reproducing area of said recording medium (10) which is loaded on the recording/reproducing apparatus; and
a judgement means (56, 43, 6) for judging whether the loaded recording medium (10) is for audio or for data storage on the basis of said control information, wherein as a result of said judgement means (56, 43, 6), when the recording medium (10) is judged as disc for audio, the recording of audio data into said data recording area and the reproduction of said data recording area and only reproducing area are allowed.

29. A recording and reproducing apparatus according to claim 21, further comprising:
a means (14) for read out control information which the rewritable control information is recorded in data recording area, only reproducing area and a part of said data recording area of said recording medium (10) which is loaded on said recording/reproducing apparatus; and
a judgement means (56, 43, 6) for judging whether the loaded recording medium (10) is for audio or for data storage on the basis of said control information, wherein as a result of said judgement means (56, 43, 6), when the recording medium (10) is judged as disc for audio, the recording of audio data into said data recording area and the reproduction of said data recording area and only reproducing area are allowed.

30. A recording and reproducing apparatus according to claim 21, further comprising:
an optical head (14) for reproducing data from recording medium (10) and for recording data to said recording medium (10);
an magnetic head (9) positioned facing said optical head (14), said recording medium (10) existing between the optical head (14) nd the magnetic head (9);
a signal processing means (15, 16) for performing a specific signal processing of the reproduction signal from said optical head (14);
a memory (7) for storing temporarily a signal from said signal processing means (15, 16); and
a memory control means (6) for controlling said memory (7).

31. A recording and reproducing apparatus according to claim 21, wherein a computer system comprises a computer which is connected with said recording/reproducing apparatus and a computer system indicates data reproduced from the recording medium (10) set in said recording/reproducing apparatus on the display of said computer.

## Patentansprüche

1. Aufzeichnungs- und Wiedergabe-Gerät, das umfasst:
ein erstes Daten-Eingabemittel (2),
ein erstes Daten-Ausgabemittel (16),
ein zweites Daten-Eingabemittel (DI),
ein zweites Daten-Ausgabemittel (DO),
ein mit den ersten Daten-Eingabe/Ausgabemitteln (2, 16) verbundenes Daten-Komprimier/Dekomprimiermittel (3) zum Komprimieren von Daten, die von dem ersten Daten-Eingabemittel (2) zugeführt werden, und zum Dekomprimieren von Daten, die dem ersten Daten-Ausgabemittel (16) zuzuführen sind,
ein Schaltmittel (42) zum Umschalten zwischen dem Ausgang des Daten-Komprimiermittels und dem zweiten Eingabemittel und zwischen dem Eingang des Daten-Dekomprimiermittels und dem zweiten Ausgabemittel,
ein Entscheidungsmittel (6) zum Entscheiden über die Datenart von Daten auf einem Aufzeichnungsmedium (10) und
ein Steuermittel (41) zum Steuern des Schaltmittels auf der Grundlage der Entscheidung des Entscheidungsmittels.

2. Aufzeichnungs- und Wiedergabe-Gerät nach Anspruch 1, wobei
in dem Entscheidungsmittel (6) zum Entscheiden über die Aufzeichnungsmedium-Datenart, wenn entschieden ist, dass das Aufzeichnungsmedium (10) ein solches für Audio ist, das Steuermittel (41) eine Steuerung derart ausführt, dass das Schaltmittel (42) von den zweiten Daten-Eingabe/Ausgabemitteln (DI, DO) zu dem Daten-Komprimier/Dekomprimiermittel (3) umschaltet.

3. Aufzeichnungs- und Wiedergabe-Gerät nach Anspruch 1, wobei
in dem Entscheidungsmittel (6) zum Entscheiden über die Aufzeichnungsmedium-Datenart, wenn entschieden ist, dass das Aufzeichnungsmedium (10) ein solches zur Datenspeicherung ist, das Steuermittel (41) eine Steuerung derart ausführt, dass das Schaltmittel (42) von dem Daten-Komprimier/Dekomprimiermittel(3) zu den zweiten Daten-Eingabe/Ausgabemitteln (DI, DO) umschaltet.

4. Aufzeichnungs- und Wiedergabe-Gerät nach einem der Ansprüche 1 bis 3, wobei das Entscheidungsmittel (6) zum Entscheiden über die Art von Daten auf dem Aufzeichnungsmedium (10) ein Unterscheidungsloch (52 - 54) beurteilt, das in einer Kassette des Aufzeichnungsmediums (10) ausgebildet ist.

5. Aufzeichnungs- und Wiedergabe-Gerät nach einem der Ansprüche 1 bis 4, wobei das Entscheidungsmittel (6) zum Entscheiden über die Art des Aufzeichnungsmediums (10) auf der Grundlage der Daten entscheidet, die zuvor in einer Steuerinformation auf dem Aufzeichnungsmedium (10) aufgezeichnet wurden.

6. Aufzeichnungs- und Wiedergabe-Gerät nach Anspruch 5, wobei die Information, welche zuvor in der Steuerinformation auf dem Aufzeichnungsmedium (10) aufgezeichnet wurde, aus Zeichenkodes besteht.

7. Aufzeichnungs- und Wiedergabe-Gerät nach Anspruch 6, wobei die Zeichenkodes "M", "I", "N" "I" oder "M", "I", "N", "X" sind.

8. Aufzeichnungs- und Wiedergabe-Gerät nach Anspruch 5, wobei das Entscheidungsmittel (6) zum Entscheiden über die Aufzeichnungsmedium-Datenart die Bit-Logik beurteilt, welche in einer vorbestimmten Position der Steuerinformation auf dem Aufzeichnungsmedium (10) aufgezeichnet ist.

9. Aufzeichnungs- und Wiedergabe-Gerät nach einem der Ansprüche 1 bis 8, das umfasst:
einen optischen Kopf (14) zum Aufzeichnen oder Wiedergeben von Daten von dem Aufzeichnungsmedium (10),
einen magnetischen Kopf (9), der dem optischen Kopf (14) gegenüberstehend angeordnet ist, wobei sich das Aufzeichnungsmedium (10) zwischen dem magnetischen Kopf (9) und dem optischen Kopf (14) befindet,
ein Signalverarbeitungsmittel (15, 16) zum Durchführen einer spezifischen Signalverarbeitung des Wiedergabesignals, das aus dem Aufzeichnungsmedium (10) ausgelesen ist, und
ein Speicher-Steuermittel (43) zum Steuern des Signalverarbeitungsmittels (15, 16).

10. Aufzeichnungs- und Wiedergabe-Gerät, das umfasst:
einen Kopf (3, 4) zum Wiedergeben von Daten von einem Aufzeichnungsmedium (2) und zum Aufzeichnen von Daten auf dem Aufzeichnungsmedium (2),
ein Signalverarbeitungsmittel (5) zum Durchführen einer spezifischen Signalverarbeitung des Wiedergabesignals, das unter Benutzung des Kopfes (3) ausgelesen ist,
ein Mittel (21) zum Umwandeln des Signals aus dem Signalverarbeitungsmittel (5) in ein Audiosignal,
ein Entscheidungsmittel (56) zum Entscheiden über die Datenart des Aufzeichnungsmediums (10) und
ein Steuermittel (43) zum Verhindern des Aufzeichnungs/Wiedergabevorgangs, wenn entschieden ist, dass ein Aufzeichnungsmedium (10) für eine Nicht-Audiodaten-Speicherung in das Gerät geladen ist.

11. Aufzeichnungs- und Wiedergabe-Gerät nach Anspruch 10, wobei die Steuerung zum Verhindern des Aufzeichnungs/Wiedergabevorgangs das geladene Aufzeichnungsmedium (10) zurückweist.

12. Aufzeichnungs- und Wiedergabe-Gerät nach Anspruch 10 oder 11, wobei das Entscheidungsmittel (56) zum Entscheiden über die Datenart des Aufzeichnungsmediums (10) Unterscheidungslöcher (52 - 54) beurteilt, die in der Kassette des Aufzeichnungsmediums (10) ausgebildet sind.

13. Aufzeichnungs- und Wiedergabe-Gerät nach Anspruch 10 oder 11, wobei das Entscheidungsmittel (56) zum Entscheiden über die Datenart des Aufzeichnungsmediums (10) auf der Grundlage der Information entscheidet, die zuvor in der Steuerinformation auf dem Aufzeichnungsmedium (10) aufgezeichnet wurde.

14. Aufzeichnungs- und Wiedergabe-Gerät nach einem der Ansprüche 10 bis 13, das ferner ein Anzeigemittel umfasst zum Anzeigen einer Warnung, wenn entschieden ist, dass ein anderes als das Aufzeichnungsmedium (10) für eine Datenspeicherung in das Entscheidungsmittel (56) geladen ist.

15. Aufzeichnungs- und Wiedergabe-Gerät nach einem der Ansprüche 12 bis 14, wobei die Daten, welche zuvor in der Steuerinformation auf dem Aufzeichnungsmedium (10) aufgezeichnet wurden, ein charakteristischer Kode sind.

16. Aufzeichnungs- und Wiedergabe-Gerät nach Anspruch 15, wobei die charakteristischen Kodes "M", "I", "N", "I", oder "M", "I", "N", "X" sind.

17. Aufzeichnungs- und Wiedergabe-Gerät nach einem der Ansprüche 10 bis 16, wobei das Entscheidungsmittel (56) zum Entscheiden über die Datenart des Aufzeichnungsmediums (10) die Bit-Logik beurteilt, welche in einer spezifischen Position der Steuerinformation auf dem Aufzeichnungsmedium (10) aufgezeichnet ist.

18. Aufzeichnungs- und Wiedergabe-Gerät nach einem der Ansprüche 10 bis 17, das ferner umfasst:
ein Mittel (14, 16) zum Auslesen von Steuerinformation, die in einem Datenaufzeichnungsbereich, einem Nur-Wiedergabebereich und einem Teil des Nur-Wiedergabebereichs des Aufzeichnungsmediums aufgezeichnet ist, das in das Aufzeichnungs- und Wiedergabe-Gerät geladen ist, und
ein Entscheidungsmittel (6) zum Entscheiden darüber, ob das geladene Aufzeichnungsmedium (10) eine solches für Audio oder für eine Datenspeicherung ist, auf der Grundlage der Steuerinformation, wobei als ein Ergebnis der Entscheidung des Entscheidungsmittel (6), wenn das Aufzeichnungsmedium (10) als Platte für Audio beurteilt ist, das Aufzeichnen von Audiodaten in dem Datenaufzeichnungsbereich und das Wiedergeben aus dem Datenaufzeichnungsbereich und dem Nur-Wiedergabebereich zulässig sind.

19. Aufzeichnungs- und Wiedergabe-Gerät nach einem der Ansprüche 10 bis 17, das ferner umfasst:
ein Mittel (14, 16) zum Auslesen von Steuerinformation, die überschreibbare Steuerinformation ist, die in einem Datenaufzeichnungsbereich, einem Nur-Wiedergabebereich und einem Teil des Datenaufzeichnungsbereichs des Aufzeichnungsmediums (10) aufgezeichnet ist, das in das Aufzeichnungs- und Wiedergabe-Gerät geladen ist, und
ein Entscheidungsmittel (6) zum Entscheiden darüber, ob das geladene Aufzeichnungsmedium (10) ein solches für Audio oder für eine Datenspeicherung ist, auf der Grundlage der Steuerinformation, wobei als ein Ergebnis der Entscheidung des Entscheidungsmittels (6), wenn das Aufzeichnungsmedium (10) als Platte für Audio beurteilt ist, das Aufzeichnen von Audiodaten in dem Datenaufzeichnungsbereich und das Wiedergeben der Daten aus dem Aufzeichnungsbereich und dem Nur-Wiedergabebereich zulässig sind.

20. Aufzeichnungs- und Wiedergabe-Gerät nach einem der Ansprüche 10 bis 17, das ferner umfasst:
einen optischen Kopf (14) zum Wiedergeben von Daten von dem Aufzeichnungsmedium (10) und zum Aufzeichnen von Daten auf dem Aufzeichnungsmedium (10),
einen magnetischen Kopf (9), der derart positioniert ist, dass er dem optischen Kopf (14) gegenübersteht, wobei sich das Aufzeichnungsmedium (10) zwischen dem optischen Kopf (14) und dem magnetischen Kopf (9) befindet,
ein Signalverarbeitungsmittel (15, 16) zum Durchführen einer spezifischen Signalverarbeitung des Wiedergabesignals von dem optischen Kopf (14),
einen Speicher (7) zum vorübergehenden Speichern eines Signals aus dem Signalverarbeitungsmittel (15, 16) und
ein Speicher-Steuermittel (6) zum Steuern des Speichers (7).

21. Aufzeichnungs- und Wiedergabe-Gerät, das umfasst:
einen Kopf (3, 4) zum Wiedergeben von Daten von einem Aufzeichnungsmedium (2) und zum Aufzeichnen von Daten auf dem Aufzeichnungsmedium (2),
ein Signalverarbeitungsmittel (2, 21) zum Durchführen einer spezifischen Signalverarbeitung des wiedergegebenen Signals, das unter Benutzung des Kopfes (3) ausgelesen ist,
ein Mittel (22, 23) zum Ausgeben eines Signals von dem Signalverarbeitungsmittel,
ein Entscheidungsmittel (56, 43, 6) zum Entscheiden über die Datenart des Aufzeichnungsmediums (10) und
ein Steuermittel (41) zum Steuern, um den Aufzeichnungs- und Wiedergabevorgang zu verhindern, wenn entschieden ist, dass das Aufzeichnungsmedium (10) für Audio in das Gerät geladen ist.

22. Aufzeichnungs- und Wiedergabe-Gerät nach Anspruch 21, wobei das Entscheidungsmittel (56, 43, 6) zum Entscheiden über die Datenart des Aufzeichnungsmediums (10) Unterscheidungslöcher (52 - 54) beurteilt, die in der Kassette (51) des Aufzeichnungsmediums (10) ausgebildet sind.

23. Aufzeichnungs- und Wiedergabe-Gerät nach Anspruchs 21 oder 22, wobei das Entscheidungsmittel (56, 43, 6) zum Entscheiden über die Datenart des Aufzeichnungsmediums (10) auf der Grundlage der Information entscheidet, die zuvor in der Steuerinformation auf dem Aufzeichnungsmedium (10) aufgezeichnet wurde.

24. Aufzeichnungs- und Wiedergabe-Gerät nach einem der Ansprüche 21 bis 23, das ferner ein Anzeigemittel umfasst zum Anzeigen einer Warnung, wenn entschieden ist, dass ein anderes als das Aufzeichnungsmedium (10) für eine Datenspeicherung in das Entscheidungsmittel (56, 43, 6) geladen ist.

25. Aufzeichnungs- und Wiedergabe-Gerät nach Anspruch 21, wobei die Daten, welche zuvor in der Steuerinformation auf dem Aufzeichnungsmedium (10) aufgezeichnet wurden, ein charakteristischer Kode sind.

26. Aufzeichnungs- und Wiedergabe-Gerät nach Anspruch 25, wobei die charakteristischen Kodes "M", "I", "N", "I" oder "M", "I", "N", "X" sind.

27. Aufzeichnungs- und Wiedergabe-Gerät nach Anspruch 21, wobei das Entscheidungsmittel (56, 43, 6) zum Entscheiden über die Art des Aufzeichnungsmediums (10) die Bit-Logik beurteilt, welche in einer spezifischen Position der Steuerinformation auf dem Aufzeichnungsmedium (10) aufgezeichnet ist.

28. Aufzeichnungs- und Wiedergabe-Gerät nach Anspruch 21, das ferner umfasst:
ein Mittel (14) zum Auslesen von Steuerinformation, die in einem Datenaufzeichnungsbereich, einem Nur-Wiedergabebereich und einem Teil des Nur-Wiedergabebereichs des Aufzeichnungsmediums (19) aufgezeichnet ist, das in das Aufzeichnungs- und Wiedergabe-Gerät geladen ist, und
ein Entscheidungsmittel (56, 43, 6) zum Entscheiden darüber, ob das geladene Aufzeichnungsmedium (10) ein solches für Audio oder für eine Datenspeicherung ist, auf der Grundlage der Steuerinformation, wobei als ein Ergebnis der Entscheidung des Entscheidungsmittels (56, 43, 6), wenn das Aufzeichnungsmedium (10) als eine Platte für Audio beurteilt ist, das Aufzeichnen von Audiodaten in dem Datenaufzeichnungsbereich und das Wiedergeben der Daten aus dem Datenaufzeichnungsbereich und dem Nur-Wiedergabebereich zulässig sind.

29. Aufzeichnungs- und Wiedergabe-Gerät nach Anspruch 21, das ferner umfasst:
ein Mittel (14) zum Auslesen von Steuerinformation, die überschreibbare Steuerinformation ist, die in einem Datenaufzeichnungsbereich, einem Nur-Wiedergabebereich und einem Teil des Datenaufzeichnungsbereichs des Aufzeichnungsmediums (10) aufgezeichnet ist, das in das Aufzeichnungs- und Wiedergabe-Gerät geladen ist, und
ein Entscheidungsmittel (56, 43, 6) zum Entscheiden darüber, ob das geladene Aufzeichnungsmedium (10) ein solches für Audio oder für eine Datenspeicherung ist, auf der Grundlage der Steuerinformation, wobei als ein Ergebnis der Entscheidung des Entscheidungsmittels (56, 43, 6), wenn das Aufzeichnungsmedium (10) als Platte für Audio beurteilt ist, das Aufzeichnen von Audiodaten in dem Datenaufzeichnungsbereich und das Wiedergeben der Daten aus dem Aufzeichnungsbereich und dem Nur-Wiedergabebereich zulässig sind.

30. Aufzeichnungs- und Wiedergabe-Gerät nach Anspruch 21, das ferner umfasst:
einen optischen Kopf (14) zum Wiedergeben von Daten von dem Aufzeichnungsmedium (10) und zum Aufzeichnen von Daten auf dem Aufzeichnungsmedium (10),
einen magnetischen Kopf (9), der derart positioniert ist, dass er dem optischen Kopf (14) gegenübersteht, wobei sich das Aufzeichnungsmedium (10) zwischen dem optischen Kopf (14) und dem magnetischen Kopf (9) befindet,
ein Signalverarbeitungsmittel (15, 16) zum Durchführen einer spezifischen Signalverarbeitung des Wiedergabesignals von dem optischen Kopf (14),
einen Speicher (7) zum vorübergehenden Speichern eines Signals aus dem Signalverarbeitungsmittel (15, 16) und
ein Speicher-Steuermittel (6) zum Steuern des Speichers (7).

31. Aufzeichnungs- und Wiedergabe-Gerät nach Anspruch 21, wobei ein Computer-System einen Computer umfasst, der mit dem Aufzeichnungs- und Wiedergabe-Gerät verbunden ist, und ein Computer-System Daten, die von dem Aufzeichnungsmedium (10) wiedergegeben werden, das in das Aufzeichnungs- und Wiedergabe-Gerät eingelegt ist, auf dem Bildschirm der Anzeigeeinrichtung des Computers anzeigt.

## Revendications

1. Appareil d'enregistrement et de reproduction, comprenant :
des premiers moyens d'entrée de données (2) ; des premiers moyens de sortie de données (16) ;
des seconds moyens d'entrée de données (DI) ; des seconds moyens de sortie de données (DO) ;
des moyens de compression/décompression de données (3) connectés auxdits premiers moyens d'entrée/de sortie de données (2, 16), pour compresser les données fournies par les premiers moyens d'entrée de données (2) et pour décompresser les données à fournir auxdits premiers moyens de sortie de données (16) ;
des moyens de commutation (42) pour effectuer la commutation entre la sortie desdits moyens de compression de données et lesdits seconds moyens d'entrée, et entre l'entrée desdits moyens de décompression de données et lesdits seconds moyens de sortie de données ;
des moyens de jugement (6) pour juger le type de données du support d'enregistrement (10) ; et
des moyens de contrôle (41) pour contrôler lesdits moyens de commutation sur la base desdits moyens de jugement.

2. Appareil d'enregistrement et de reproduction selon la revendication 1, dans lequel :
dans lesdits moyens de jugement (6) pour juger le type de données d'un support d'enregistrement, lorsqu'il est jugé que ledit support d'enregistrement (10) est pour le son, lesdits moyens de contrôle (41) effectuent le contrôle pour commuter lesdits moyens de commutation (42) desdits seconds moyens d'entrée/de sortie de données (DI, DO) vers lesdits moyens de compression/décompression de données (3).

3. Appareil d'enregistrement et de reproduction selon la revendication 1, dans lequel :
dans lesdits moyens de jugement (6) pour juger le type de données du support d'enregistrement, lorsqu'il est jugé que ledit support d'enregistrement (10) sert à la mémorisation de données, lesdits moyens de contrôle (41) effectuent le contrôle pour commuter lesdits moyens de commutation (42) desdits moyens de compression/décompression de données (3) vers lesdits seconds moyens d'entrée/de sortie de données (DI, DO).

4. Appareil d'enregistrement et de reproduction selon l'une quelconque des revendications 1 à 3, dans lequel lesdits moyens de jugement (6) pour juger le type de données du support d'enregistrement (10) jugent un trou de discrimination (52 - 54) qui est formé sur une cassette du support d'enregistrement (10).

5. Appareil d'enregistrement et de reproduction selon l'une quelconque des revendications 1 à 4, dans lequel lesdits moyens de jugement (6) pour juger le type de support d'enregistrement (10) effectuent le jugement en se basant sur les données qui sont enregistrées au préalable dans des informations de contrôle sur le support d'enregistrement (10).

6. Appareil d'enregistrement et de reproduction selon la revendication 5, dans lequel les informations qui sont enregistrées au préalable dans les informations de contrôle sur ledit support d'enregistrement (10) sont des codes de caractères.

7. Appareil d'enregistrement et de reproduction selon la revendication 6, dans lequel lesdits codes de caractères sont "M", "I", "N", "I", ou "M", "I", "N", "X".

8. Appareil d'enregistrement et de reproduction selon la revendication 5, dans lequel lesdits moyens de jugement (6) pour juger le type de données du support d'enregistrement jugent le niveau logique du bit qui est enregistré à la position prédéterminée des informations de contrôle sur le support d'enregistrement (10).

9. Appareil d'enregistrement et de reproduction selon l'une quelconque des revendications 1 à 8, comprenant :
une tête optique (14) pour enregistrer ou reproduire des données à partir du support d'enregistrement (10) ;
une tête magnétique (9) qui est placée face à ladite tête optique (14), dans lequel le support d'enregistrement (10) se trouve entre la tête magnétique (9) et la tête optique (14) ;
des moyens de traitement de signal (15, 16) pour exécuter un traitement de signal spécifique du signal de reproduction lu à partir dudit support d'enregistrement (10) ; et
des moyens de contrôle de mémoire (43) pour contrôler lesdits moyens de traitement de signal (15, 16).

10. Appareil d'enregistrement et de reproduction, comprenant :
une tête (3, 4) pour reproduire des données à partir d'un support d'enregistrement (2) et pour enregistrer des données sur le support d'enregistrement (2) ;
des moyens de traitement de signal (5) pour effectuer un traitement de signal spécifique du signal de reproduction lu en utilisant ladite tête (3) ;
des moyens (21) pour convertir le signal provenant desdits moyens de traitement de signal (5) en un signal audio ;
des moyens de jugement (56) pour juger le type de données du support d'enregistrement (10) ; et
des moyens de contrôle (43) pour interdire l'opération d'enregistrement/reproduction lorsqu'il est jugé qu'un support d'enregistrement (10) pour la mémorisation de données non audio est chargé dans ledit appareil.

11. Appareil d'enregistrement et de reproduction selon la revendication 10, dans lequel le contrôle d'interdiction de ladite opération d'enregistrement/reproduction rejette le support d'enregistrement (10) chargé.

12. Appareil d'enregistrement et de reproduction selon la revendication 10 ou 11, dans lequel les moyens de jugement (56) pour juger le type de données dudit support d'enregistrement (10) jugent les trous de discrimination (52 - 54) formés sur la cassette de support d'enregistrement (10).

13. Appareil d'enregistrement et de reproduction selon la revendication 10 ou 11, dans lequel les moyens de jugement (56) pour juger le type de données dudit support d'enregistrement (10) effectuent le jugement sur la base des informations enregistrées au préalable dans les informations de contrôle sur le support d'enregistrement (10).

14. Appareil d'enregistrement et de reproduction selon l'une quelconque des revendications 10 à 13, comprenant, de plus, des moyens d'indication pour indiquer un avertissement lorsqu'il est jugé qu'un support autre que le support d'enregistrement (10) pour la mémorisation de données est chargé dans lesdits moyens de jugement (56).

15. Appareil d'enregistrement et de reproduction selon l'une quelconque des revendications 12 à 14, dans lequel les données enregistrées au préalable dans les informations de contrôle sur ledit support d'enregistrement (10) sont un code caractéristique.

16. Appareil d'enregistrement et de reproduction selon la revendication 15, dans lequel lesdits codes caractéristiques sont "M", "I", "N", "I", ou "M", "I", "N", "X".

17. Appareil d'enregistrement et de reproduction selon l'une quelconque des revendications 10 à 16, dans lequel lesdits moyens de jugement (56) pour juger le type de données du support d'enregistrement (10) jugent le niveau logique du bit enregistré à la position spécifique des informations de contrôle sur le support d'enregistrement (10).

18. Appareil d'enregistrement et de reproduction selon l'une quelconque des revendications 10 à 17, comprenant, de plus :
des moyens (14, 16) pour lire les informations de contrôle qui sont enregistrées dans la zone d'enregistrement de données, dans la zone de reproduction seulement et dans une partie de ladite zone de reproduction seulement dudit support d'enregistrement qui est chargé sur ledit appareil d'enregistrement/reproduction ; et
des moyens de jugement (6) pour juger si le support d'enregistrement (10) chargé est pour le son ou pour la mémorisation de données sur la base desdites informations de contrôle, dans lequel en conséquence desdits moyens de jugement (6), lorsque le support d'enregistrement (10) est jugé comme étant un disque pour le son, l'enregistrement de données audio dans ladite zone d'enregistrement de données et la reproduction de ladite zone d'enregistrement de données et de la zone de reproduction seulement sont autorisés.

19. Appareil d'enregistrement et de reproduction selon l'une quelconque des revendications 10 à 17, comprenant, de plus :
des moyens (14, 16) pour lire les informations de contrôle qui sont des informations de contrôle réinscriptibles enregistrées dans la zone d'enregistrement de données, dans la zone de reproduction seulement et dans une partie de ladite zone d'enregistrement de données dudit support d'enregistrement (10) qui est chargé sur ledit appareil d'enregistrement/reproduction ; et
des moyens de jugement (6) pour juger si le support d'enregistrement (10) chargé est pour le son ou pour la mémorisation de données sur la base desdites informations de contrôle, dans lequel en conséquence desdits moyens de jugement (6), lorsque le support d'enregistrement (10) est jugé comme étant un disque pour le son, l'enregistrement de données audio dans ladite zone d'enregistrement de données et la reproduction de ladite zone d'enregistrement de données et de la zone de reproduction seulement sont autorisés.

20. Appareil d'enregistrement et de reproduction selon l'une quelconque des revendications 10 à 17, comprenant, de plus :
une tête optique (14) pour reproduire des données à partir du support d'enregistrement (10) et pour enregistrer des données sur ledit support d'enregistrement (10) ;
une tête magnétique (9) positionnée face à ladite tête optique (14), ledit support d'enregistrement (10) se trouvant entre la tête optique (14) et la tête magnétique (9) ;
des moyens de traitement de signal (15, 16) pour exécuter un traitement de signal spécifique du signal de reproduction provenant de ladite tête optique (14) ;
une mémoire (7) pour mémoriser de manière temporaire un signal provenant desdits moyens de traitement de signal (15, 16) ; et
des moyens de contrôle de mémoire (6) pour contrôler ladite mémoire (7).

21. Appareil d'enregistrement et de reproduction comprenant :
une tête (3, 4) pour reproduire des données à partir d'un support d'enregistrement (2) et pour enregistrer des données sur le support d'enregistrement (2) ;
des moyens de traitement de signal (2, 21) pour exécuter un traitement de signal spécifique du signal reproduit lu en utilisant ladite tête (3) ;
des moyens (22, 23) pour sortir le signal provenant desdits moyens de traitement de signal ;
des moyens de jugement (56, 43, 6) pour juger le type de données du support d'enregistrement (10) ; et
des moyens de contrôle (41) pour effectuer un contrôle pour interdire l'opération d'enregistrement et de reproduction lorsqu'il est jugé que le support d'enregistrement (10) pour le son est chargé dans ledit appareil.

22. Appareil d'enregistrement et de reproduction selon la revendication 21, dans lequel lesdits moyens de jugement (56, 43, 6) pour juger le type de données du support d'enregistrement (10) jugent les trous de discrimination (52 - 54) formés sur la cassette (51) du support d'enregistrement (10).

23. Appareil d'enregistrement et de reproduction selon la revendication 21 ou 22, dans lequel lesdits moyens de jugement (56, 43, 6) pour juger le type de données du support d'enregistrement (10) effectuent le jugement sur la base des informations enregistrées au préalable dans les informations de contrôle sur le support d'enregistrement (10).

24. Appareil d'enregistrement et de reproduction selon l'une quelconque des revendications 21 à 23, comprenant, de plus, des moyens d'indication pour indiquer un avertissement lorsqu'il est jugé qu'un support autre que le support d'enregistrement (10) pour la mémorisation de données est chargé dans lesdits moyens de jugement (56, 43, 6).

25. Appareil d'enregistrement et de reproduction selon la revendication 21, dans lequel les données enregistrées au préalable dans les informations de contrôle sur ledit support d'enregistrement (10) sont un code caractéristique.

26. Appareil d'enregistrement et de reproduction selon la revendication 25, dans lequel lesdits codes caractéristiques sont "M", "I", "N", "I", ou "M", "I", "N", "X".

27. Appareil d'enregistrement et de reproduction selon la revendication 21, dans lequel lesdits moyens de jugement (56, 43, 6) pour juger le type du support d'enregistrement (10) jugent le niveau logique du bit enregistré à la position spécifique des informations de contrôle sur le support d'enregistrement (10).

28. Appareil d'enregistrement et de reproduction selon la revendication 21, comprenant, de plus :
des moyens (14) pour lire les informations de contrôle qui sont enregistrées dans la zone d'enregistrement de données, dans la zone de reproduction seulement et dans une partie de ladite zone de reproduction seulement dudit support d'enregistrement (10) qui est chargé sur l'appareil d'enregistrement/reproduction ; et
des moyens de jugement (56, 43, 6) pour juger si le support d'enregistrement (10) chargé est pour le son ou pour la mémorisation de données sur la base desdites informations de contrôle, dans lequel en conséquence desdits moyens de jugement (56, 43, 6), lorsque le support d'enregistrement (10) est jugé comme étant un disque pour le son, l'enregistrement de données audio dans ladite zone d'enregistrement de données et la reproduction de ladite zone d'enregistrement de données et de la zone de reproduction seulement sont autorisés.

29. Appareil d'enregistrement et de reproduction selon la revendication 21, comprenant, de plus :
des moyens (14) pour lire les informations de contrôle qui sont des informations de contrôle réinscriptibles enregistrées dans la zone d'enregistrement de données, dans la zone de reproduction seulement et dans une partie de ladite zone d'enregistrement de données dudit support d'enregistrement (10) qui est chargé sur ledit appareil d'enregistrement/reproduction ; et
des moyens de jugement (56, 43, 6) pour juger si le support d'enregistrement (10) chargé est pour le son ou pour la mémorisation de données sur la base desdites informations de contrôle, dans lequel en conséquence desdits moyens de jugement (56, 43, 6), lorsque le support d'enregistrement (10) est jugé comme étant un disque pour le son, l'enregistrement de données audio dans ladite zone d'enregistrement de données et la reproduction de ladite zone d'enregistrement de données et de la zone de reproduction seulement sont autorisés.

30. Appareil d'enregistrement et de reproduction selon la revendication 21, comprenant, de plus :
une tête optique (14) pour reproduire des données à partir du support d'enregistrement (10) et pour enregistrer des données sur ledit support d'enregistrement (10) ;
une tête magnétique (9) positionnée face à ladite tête optique (14), ledit support d'enregistrement (10) se trouvant entre la tête optique (14) et la tête magnétique (9) ;
des moyens de traitement de signal (15, 16) pour exécuter un traitement de signal spécifique du signal de reproduction provenant de ladite tête optique (14) ;
une mémoire (7) pour mémoriser de manière temporaire un signal provenant desdits moyens de traitement de signal (15, 16) ; et
des moyens de contrôle de mémoire (6) pour contrôler ladite mémoire (7).

31. Appareil d'enregistrement et de reproduction selon la revendication 21, dans lequel un système informatique comprend un ordinateur qui est connecté audit appareil d'enregistrement/reproduction et un système informatique indique des données reproduites à partir du support d'enregistrement (10) positionné dans ledit appareil d'enregistrement/reproduction sur l'affichage dudit ordinateur.
